# EUROPEAN PATENT APPLICATION

(11) **EP 2 063 594 A1**
(43) Date of publication of application: **27.05.2009**
(21) Application number: 07291395.7
(22) Date of filing: 23.11.2007
(51) Int. Cl.: H04L 27/00, H04L 25/02

(54) **Receiver with adjustable decoding speed and corresponding method**

(71) Applicant: Sequans Communications, 92073 Paris La Défense Cedex (FR)
(72) Inventor: Bazzaz, Paul, 75020 Paris (FR)
(74) Representative: Pichat, Thierry

(57) **Abstract**

Method for adjusting decoding speed of an incoming signal comprising at least a first and a second data coded with respectively a first and a second type of modulation and coding scheme, the method comprising at least the steps of:
- Determining (23) a quality value representative of the quality of the incoming signal;
- decoding the first data, by performing functions data;
- extracting (24) from the first decoded data, at least a coding information giving the type of modulation and coding scheme used to code the second data;
- determining a margin between a reference value and the quality value, the reference value being correlated with the coding information; and
- determining a control signal according to the margin, to adjust at least a parameter of at least one function, the parameter affecting the speed of the decoding of the second data.

## Description

The present invention relates generally to wireless communication systems.
More precisely, according to an aspect, the invention relates to a method for adjusting the decoding speed of an incoming signal comprising successive frames, each of which comprising data coded with at least a modulation and coding scheme.
According to another aspect, the invention relates to a receiver with adjustable decoding speed of an incoming signal.

In typical communication system, a signal transmitted from one point to another, carries for example message data and control information data, each of which being coded in accordance with a type of modulation and coding scheme (MCS).
The signal may be transmitted by using for example OFDM (Orthogonal Frequency Division Multiplexing) technique, which is a transmission technique where data stream is multiplexed over multiple orthogonal subcarriers.
The signal may also be transmitted by using for example OFDMA (Orthogonal Frequency Division Multiple Access) technique, which is a variant of OFDM technique, and wherein the available spectrum is used simultaneously by multiple users which are using different orthogonal subcarriers.
A modulation and coding scheme is for example a QAM (Quadrature Amplification Modulation) or a QPSK (Quadrature Phase-Shift Key).

In order to decode correctly this signal, that is to say to recover the control information data and the message data, a receiver performs a decoding process, the decoding process consisting in performing a plurality of functions.
A function is for example, amplification, or filtering, or analog-to-digital conversion, or time domain processing, or fast Fourier transform, or frequency domain processing (such as channel estimation, or channel correction, or constellation demapping), or error correction.

Each of the above functions introduces some delay. As a consequence, the decoding process is not instantaneous and introduces a one-way delay for the receiver.
For some functions, the delay is incompressible, assuming a given working frequency. For other functions, the delay is linked to the desired and achieved decoding performance. Indeed, for achieving a given decoding performance, decoding algorithms implemented in the receiver may be complex and may need long processing time.
This delay introduced by the functions is inherent for the reception of a signal, and is harmful at different levels. At interactive application level, this may slows down the two ways communication between an end-user and an application server (for instance a web server). At communication protocol level, this may slows down the process, reducing the performance of the protocol. At link level, during this delay, the receiver cannot use useful control information in order to react and adapt accordingly, and instead, acts in some kind of blind mode.
Moreover, due to this delay, the receiver may be active longer, increasing the power consumption and thus reducing the battery life.

Therefor, for equipment involved in receiving signals, the decoding speed may be accelerated in order to decode the signals rapidly with an acceptable loss in performance. More particularly, there is a need for a solution that allows adapting (for example reducing) the speed of the decoding process, depending on some criteria.

For this purpose, an object of the invention is a method for adjusting the decoding speed of an incoming signal, the incoming signal comprising successive frames, each of which comprising at least a first data coded in accordance with a first type of modulation and coding scheme and a second data coded with a second type of modulation and coding scheme. The method comprising at least the steps of:
- receiving the incoming signal;
- Determining a quality value representative of the quality of the incoming signal;
- performing a decoding process to decode the first data, said decoding process consisting in performing a plurality of functions, and generating a first decoded data; and
- extracting from the first decoded data, at least a coding information giving the type of modulation and coding scheme used to code the second data.

The method is mainly characterized in that it further comprises the steps of:
- determining a margin between a reference value and the quality value, the reference value being correlated with the coding information; and
- determining and generating a control signal according to the margin, to adjust at least a parameter of at least one function, the parameter affecting the speed of the decoding process of the second data.

The information giving the type of modulation and coding scheme used to code the first data can be stored in a table, and the second data may comprise a control plane.

In a particular embodiment, the first data may comprise the control plane and the second data may comprise a data plane.

In another particular embodiment, the first data may comprise a first control plane and the second data may comprise a second control plane.

Advantageously, the first control plane is a Frame Control Header (FCH), the second control plane is a Map Application Part Information Element (MAP-IE), and the data plane is a burst, according to a particular standard WiMAX (Wireless Interoperability for Microwave Access).

Preferably, the step of determining the quality value is performed at least once per frame.

Advantageously, the step of determining the quality value comprises the step of performing one or a plurality of quality measurements of the incoming signal, and the quality value may be equal to the result of said quality measurement or the result of one quality measurement of said plurality of quality measurements.

The quality value may be equal to the result of the last quality measurement of said plurality of quality measurements.

Advantageously, the step of determining the quality value comprises the steps of:
- performing a plurality of quality measurements of the incoming signal;
- storing the results of the quality measurements in a memory; and
- performing a statistical computation by using the results stored in the memory; the quality value may be equal to the result of said statistical computation.

A quality measurement of the incoming signal can be performed by using any of the control plane or the data plane.

Preferably, the reference value is further correlated with an acceptable implementation loss.

Preferably, the method is performed at least once for each frame of the incoming signal.

The quality value may be a signal-to-noise-ratio or a carrier-to-interference-plus-noise-ratio.

For example, the parameter is adjusted in order to increase the speed of the decoding process if the value of the margin is positive, the resulting implementation loss remaining lower or equal to the acceptable implementation loss.

A function of the decoding process is for example channel estimation, and the parameter may consist in using particular reference data in the incoming signal in order to perform the channel estimation.

Another object of the invention is a receiver with adjustable decoding speed of an incoming signal in a wireless communication system. The receiver implements at least the method described above, and comprises at least:
- a decoding module implementing at least the steps of performing decoding process, the decoding module comprising a plurality of function modules, each of which performing a part of the decoding process;
- a control plane decoder module implementing at least the steps of extracting coding information;
- a quality measurement module implementing at least the steps of determining the quality value; and
- a tuner module implementing at least the steps of determining margin and control signal.

The tuner module may further comprise a list of reference values, each of which being correlated with a type of modulation and coding scheme.

Another object of the invention is a wireless communication system comprising at least the receiver described above.

Thus the proposed solution allows reducing the decoding time, and provides several major advantages to the equipment. Some of these advantages are:
- For a relay that decodes the data and forwards decoded data, reducing the processing time allows forwarding the data quickly;
- For a terminal, reducing the processing time allows reducing its power consumptions;
- For a terminal in a communication system comprising a plurality of terminals, and wherein signals comprise control plane and a plurality of data, each data being allocated to one or several terminals of the communication system, the control plane being coded robustly (for instance, coded with QPSK½ with a repetition factor of 6) and may contain indication notifying which data is allocated to which terminal of the communication system, reducing the decoding time of such control signal allows setting the terminal in standby mode, based on the indication contained in the control plane, and allows waking-up the terminal in time to decode the data which is addressed to said terminal. As the terminal can be set quickly in standby mode, its power consumption can be reduced; and
- In a communication system where the control plane contains information on how data addressed to a given terminal have been coded, reducing the control plane decoding time allows the terminal to configure itself such as to be optimized according to the coding information.

Other features and advantages of the invention will appear more clearly from the description of embodiment of the invention made hereinafter, as an indication and by no means restrictive, with reference to the accompanying drawings, wherein:
- Figure 1 shows a typical architecture of a receiver in a communication system;
- Figure 2 is a flow chart of phases passed through by the receiver, according to a particular embodiment of the invention;
- Figure 3 shows an example of frame structure according to standard IEEE 802.16e (WiMAX);
- Figure 4a shows an example of a typical architecture of a receiver according to one embodiment of the invention;
- Figure 4b shows in detail the typical architecture of figure 4a;
- Figures 5a to 5c illustrate channel estimation; and
- Figure 6a to 6c illustrate different situations of chained control and data planes.

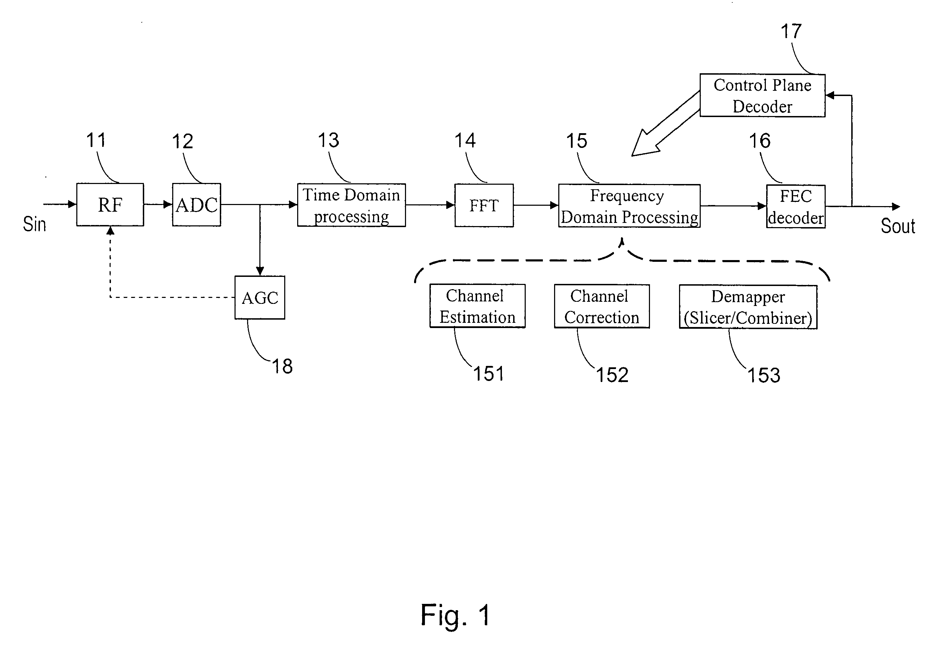

Figure 1 shows a typical architecture of a receiver. This receiver may be a part of a terminal of a communication system comprising a plurality of terminals. The receiver may receive an incoming signal Sin transmitted through a channel according to the OFDMA technique. This incoming signal may be process by a plurality of function modules, each of which performing a part of the decoding process.

The incoming signal Sin enters a radio frequency block 10 (or RF block). This RF block typically receives the incoming signal, applies a plurality of functions to the incoming signal such as amplification, filtering in order to remove out of band interference, and downconversion from a carrier frequency to a baseband frequency, and generates a baseband signal.
This baseband signal is then converted from analog to digital samples by an analog-to-digital converter 12 (or ADC). These digital samples enter into a digital global filter performing interpolation and filtering, as well as shape filtering (for example Nyquist root raised cosine filter). An intermediate signal is then generated.
This intermediate signal enters in a frequency domain processing module 15 comprising for example a channel estimator module 151, a channel correction module 152, and a demapper module 153, and generating demodulated signal. The demapper module 153 may comprise a slicer performing slicing according to a constellation diagram, and a combiner (for example in the case where several antennas are used).
The demodulated signal is then fed to a FEC (Forward Error Correction) decoder 16 performing error correction, and generating an output signal Sout representative of the demodulated and corrected incoming signal.
The previous functions describe a simplest digital receiver. The receiver may further comprise a time domain processing 13 and a FFT (Fast-Fourier Transform) module 14, to perform conversion from time to frequency domain (in the case of the reception of OFDM based signals), subcarriers shuffling, subcarriers selection, specific processing on part of the subcarriers, and other ones.
The output signal may comprise a so-called control plane and a so-called data plane, and the control plane may be used by a control plane decoder module 17 which may extract from the output signal information indicating which data is addressed to the terminal of the receiver, or information indicating the modulation and coding scheme (MCS) used to code the data. This information may be used for waking-up the receiver in time to decode the data which is addressed to the terminal.
The receiver may also comprise an automatic gain control module 18 (or AGC) for estimating the power of the intermediate signal and for controlling the amplification level applied by the RF block.

The invention is based on the performance of the receiver in a communication system, the performance being typically expressed as reference to ideal behaviour. Ideal behaviour is the result of simulated performances, in a configuration that differs from the real implementation of the receiver. For example, in digital processing domain a difference consists of data precision (floating as opposed to bit true precision), or channel knowledge (channel totally known as opposed to channel estimated), or number of iterations (infinite iterations as opposed to limited number of iterations for iterative function). This difference in digital processing domain is the main factor of the so-called Implementation Loss (IL). In the analog domain, another major impact compared to ideal behaviour is the so-called Noise Figure (NF) which reflects mainly thermal noise generated by the electronic devices.

### The performance of a receiver may be expressed as:

For a given Modulation and Coding Scheme (MCS), a target Bit Error Rate (BERt) at the output of the receiver is achieved for a real Signal-to-Noise-Ratio (SNRr) equal to the sum of an ideal Signal-to-Noise-Ratio (SNRi) and the value of the Implementation Loss, SNRr=SNRi+IL.
In an ideal situation, data sent over the link matches SNRr instantaneously.

The losses of performances are translated in a higher value of the IL. However, increasing the IL in a number of situations does not induce any harmful impact on the whole system. Indeed, there are situations where, for a given Modulation and Coding Scheme, an expected (or ideal) Signal-to-Noise-Ratio is higher to what will be the real Signal-to-Noise-Ratio (SNRr). In other words, for a given MCS, the margin between the expected Signal-to-Noise-Ratio and real Signal-to-Noise-Ratio is high. In such cases, for a given MCS, reducing the margin by increasing the IL is perfectly acceptable.

Therefore, for a given MCS used to code data of the incoming signal, by measuring regularly the SNRr, by deducing the margin from the SNRr and the SNRi, and by adjusting the complexity of the implementation of the receiver in order to reduce the margin, the implementation loss of the receiver may be changed, and the speed of the decoding process may be adjusted. The complexity of the implementation of the receiver may be changed by adjusting a parameter of a function of the decoding process.

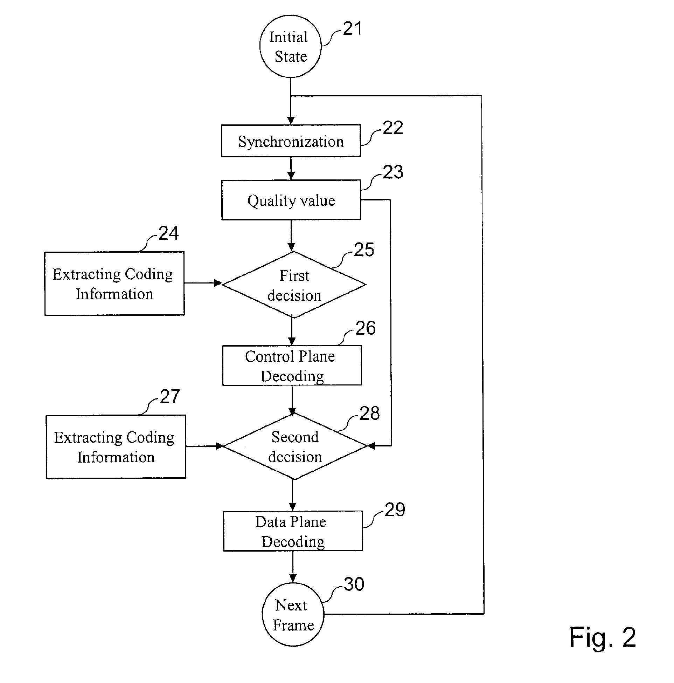

A method for adjusting the speed of the decoding process in a receiver, according to a particular embodiment of the invention, is explained below with reference to figure 2.

As initial state 21, the receiver 20 may be assumed to be already tuned on a right channel (in term of frequency band, signal bandwidth, and parameters linked to these, like for instance FFT size in an OFDMA system).
The receiver is also assumed to have synchronized 22 itself on the incoming signal Sin. This synchronization is made in time and frequency.

The incoming signal Sin comprises successive frames, each of which comprising for example a first, a second and a third data coded in accordance with respectively a first, a second and a third type of modulation and coding schemes.

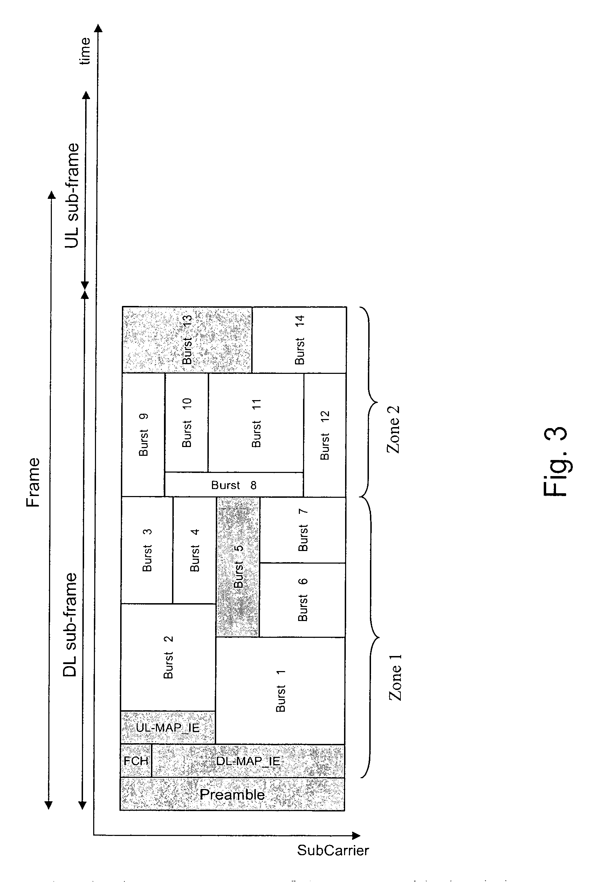

Taking standard IEEE 802.16e as example, figure 3 shows the frame structure of the incoming signal. In this figure, we assume a time division duplexing (TDD) mode. For a half frequency division duplexing (H-FDD) mode or a full division duplexing (FDD) mode, the invention can be used and implemented as well. The frame, which duration may be fixed, is split into two sub-frames, a downlink sub-frame (noted DL sub-frame) and an uplink sub-frame (noted UL sub-frame). The structure of the downlink sub-frame is also shown in figure 3 and comprises:
- Preamble which may be used by the terminal in order to synchronize an internal clock and to perform some measurements of the incoming signal quality;
- Frame Control Header (noted FCH) giving miscellaneous information on how a control plane is coded and which subchannels are used for transmission;
- Downlink Map Application Part Information Element (also noted DL-MAP_IE) and Uplink Map Application Part Information Element (also noted UL-MAP_IE), which contain control information, different forms of Map Application Part (MAP) being defined by the standard IEEE 802.16e, the control information being for example a type of modulation and coding scheme used to code a data plane; and
- a plurality of message data, also called bursts (noted burst 1 to burst 14 in figure 3), each burst being assigned to different terminals. Note that the sub-bursts as defined in 802.16e are here also covered by the word "burst".
   Figure 3 also shows zones of the downlink sub-frame:

- Zone 1 which is a non-STC (STC = Space Time Code) zone wherein the signal is sent by one antenna at a Base Station; and
- Zone 2 which is an STC zone wherein the signal is sent by more than one antenna.
   In the figure 3, the filled in blocks are signals that the receiver shall decode, and the other blocks are signals not addressed to this receiver.

The first data of the invention may comprise a first control plane, the second data may comprise a second control plane, and the third data may comprise a data plane.
The first control plane may comprise the FCH, the second control may comprise the DL-MAP_IE and the UL-MAP_IE, and the data plane may comprise at least a burst.
The information giving the type of modulation and coding scheme used to code the first control plane may be stored in a table in the receiver. The first control plane may comprise coding information giving the type of modulation and coding scheme used to code the second data, and the second control plane may comprise coding information giving the type of modulation and coding scheme used to code the third data.

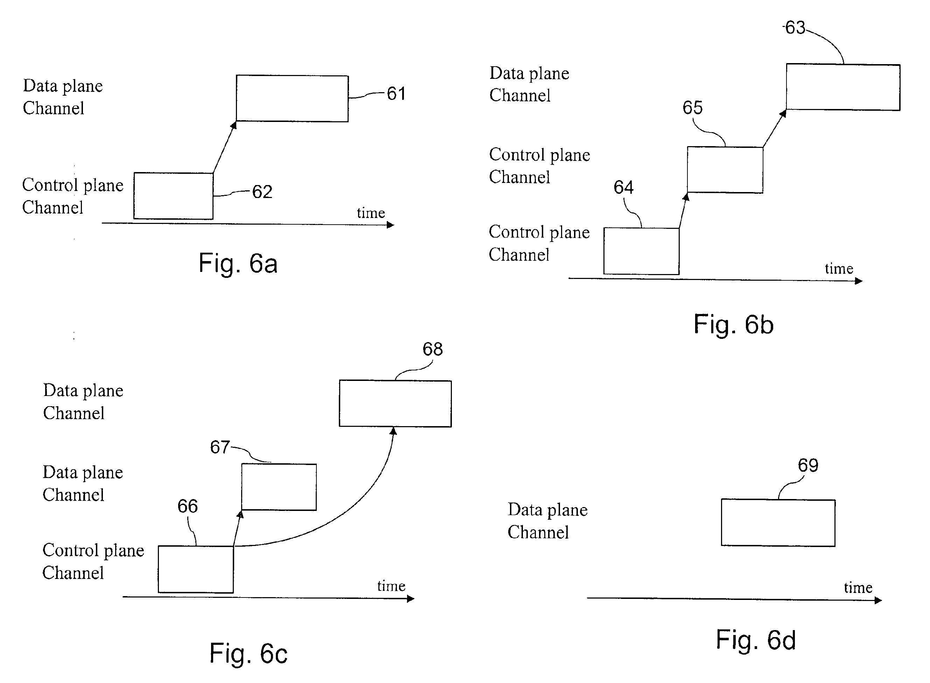

Different cases of control plane and data plane chronological and logical relationship can be expected. Some examples are shown in the figure 6a to figure 6d.
In figure 6a, for each burst 61 of data addressed to a terminal, a control information 62 is sent previously.
In Figure 6b, the control information concerning a burst of data 63 addressed to a terminal may have been split into two parts 64, 65, in which case the speeding up decision is made three times. As well, one can consider the case where control plane 66 gives information on two bursts 67, 68 in a frame addressed to the terminal (Figure 6c). As well, one can consider the case (figure 6d), though unlikely to be used, where the control information concerning burst 69 of data addressed to a terminal is fixed during a communication time to given values. In which case, the speeding up decision is done regularly on the sole data burst.

According to this particular embodiment of the invention, the method for adjusting the decoding process of the incoming signal may comprise, for one frame of the incoming signal, the steps of:
- Receiving the incoming signal;
- Determining 23 a quality value representative of the quality of the incoming signal;
- performing a decoding process to decode the first data, said decoding process consisting in performing a plurality of functions, and generating a first decoded data, in this particular embodiment, the coding information of the fist data being stored in the table in the receiver;
- extracting 24 from the first decoded data, at least a coding information giving the type of modulation and coding scheme used to code the second data;
- performing 25 a first decision for adjusting the speed of the decoding process and the corresponding speeding range, for decoding the second data;
- performing 26 a decoding process to decode the second data according to the first decision, and generating a second decoded data;
- extracting 27, from the second decoded data, at least coding information giving the type of modulation and coding scheme used to code the third data;
- performing 28 a second decision for adjusting the speed of the decoding process and the corresponding speeding range, for decoding the third data;
- decoding 29 the third data according to the second decision.

These successive steps are repeated for another frame of the incoming signal.

The first decision may consist in:
- determining a margin between a first reference value and the quality value, the first reference value being correlated with the coding information; and
- determining and generating a first control signal according to said margin, to adjust at least a parameter of at least one function, the parameter affecting the speed of the decoding process of the second data.

The second decision may consist in:
- determining a margin between a second reference value and the quality value, the second reference value being correlated with said coding information giving the type of modulation and coding scheme used to code the third data; and
- determining and generating a second control signal according to said margin, to adjust at least a parameter of at least a function, the parameter affecting the speed of the decoding process of the third data.

To determine the quality value, the receiver may analyse the channel to derive expected incoming signal quality.

The step of determining the quality value may consist in performing one or a plurality of quality measurements of the incoming signal. In this case, the quality value is equal to the result of this quality measurement or the result of one (for example the last) quality measurement of the plurality of quality measurements.

The step of determining the quality value may consist in:
- performing a plurality of quality measurements of the incoming signal;
- storing the results of the quality measurements in a local memory of the receiver; and
- performing a statistical computation by using the results stored in the memory, the quality value being equal to the result of said statistical computation.
   The statistical computation may consist in computing an average by using the results stored in the memory receiver, or may consist in estimating the channel variation.

The step of determining the quality value may be performed once per frame or several time per frame. If this step is performed once per frame, the quality value may be stored in the receiver in order to be reused.

The quality measurement of the incoming signal may be performed by using any of the first or second control plane or the data plane. For example, the quality measurement can be performed by using the so-called preamble.

The quality value may be a signal-to-noise-ratio (SNR) or carrier-to-interference-plus-noise-ratio (CINR).

For example, assuming that the quality value is a CINR equal to 15dB, and assuming that the second data is coded with QPSK½ which associated acceptable CINR is for example equal to 5dB, then the margin is given by 15dB-5dB=10dB. This margin being positive, the speed of the decoding process of the second data may be accelerated.
Assuming that the third data is coded with 64QAM which associated acceptable CINR is for example equal to 20dB, then the margin is given by 15dB-20dB=-5dB. This margin being negative, the speed of the decoding process of the third data is not accelerated.

The above flow chart is passed through constantly, frame after frame (assuming a frame structure composed of control information followed by data information). In this flow chart, the step of determining the quality value is called once (per frame) but it can be as well called as often as needed on signals that are relevant for the receiver (for instance beamformed signal shall not be used if not addressed to the terminal).
Moreover, this flow chart assumes a typical case where for each burst of data addressed to a terminal, the control information is sent previously.
But other cases can be supported as well. The control information concerning a burst addressed to a terminal may have been split into two parts, in this case the speeding up decision is made three times. As well, the case where the control plane gives information on two bursts in a frame addressed to the terminal can be considered. As well, the case where the control information concerning burst of data addressed to a terminal is fixed during a communication time to given values can be considered, and the speeding up decision is done regularly on the sole burst.

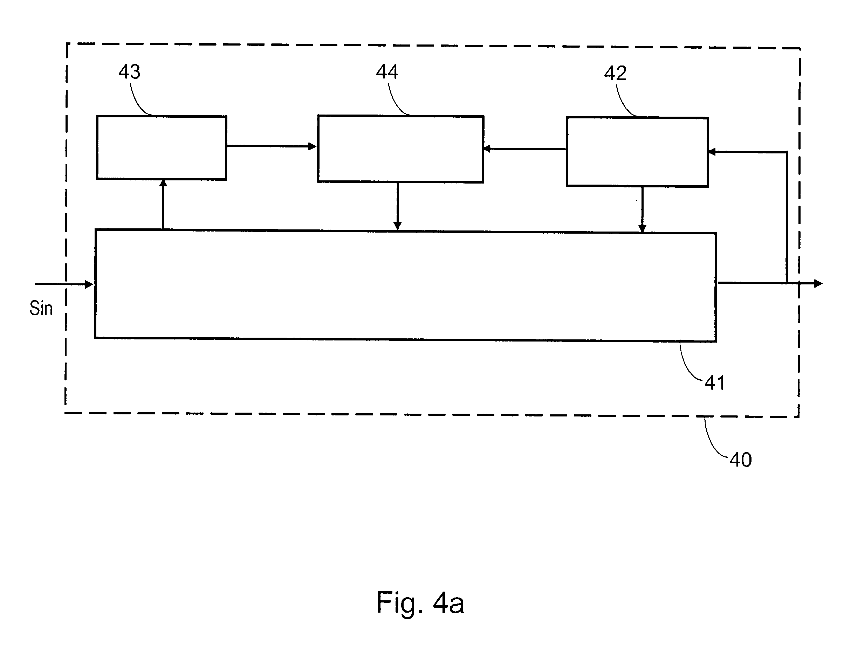

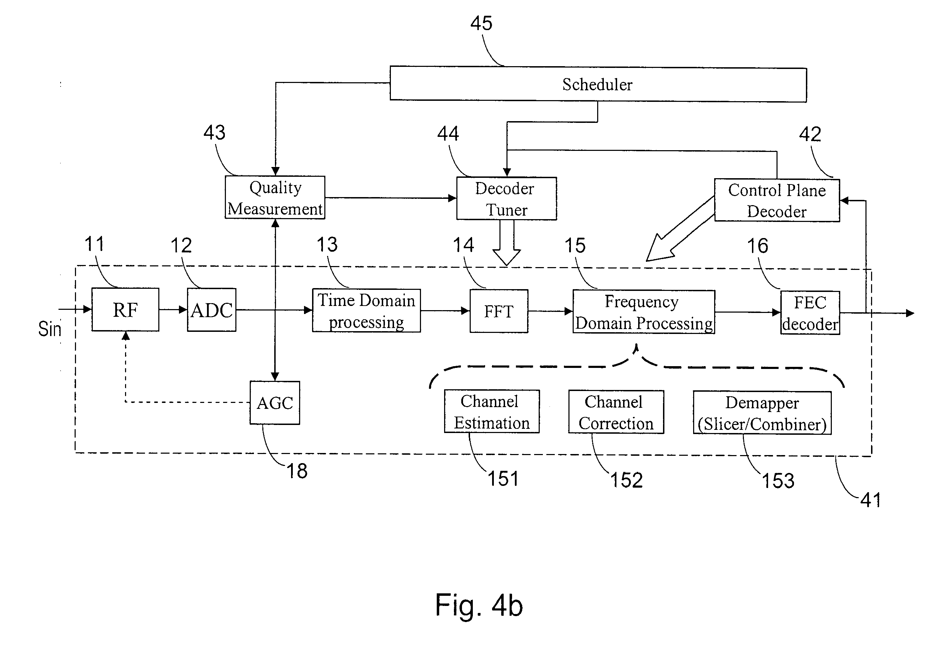

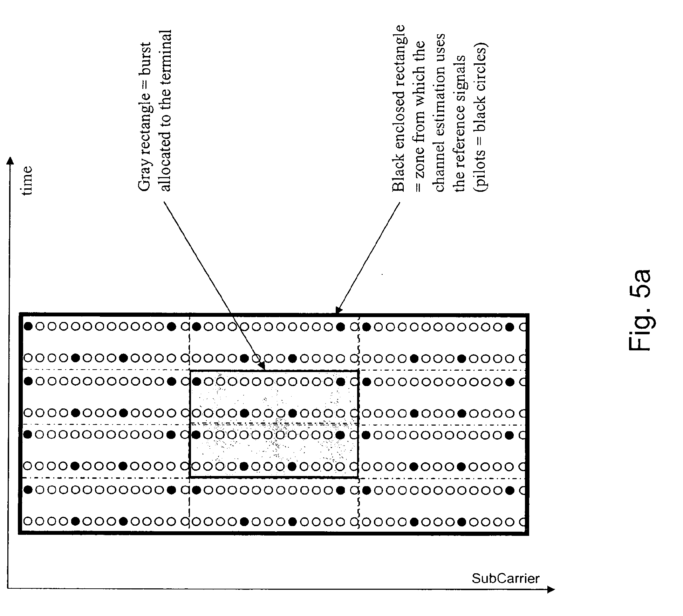

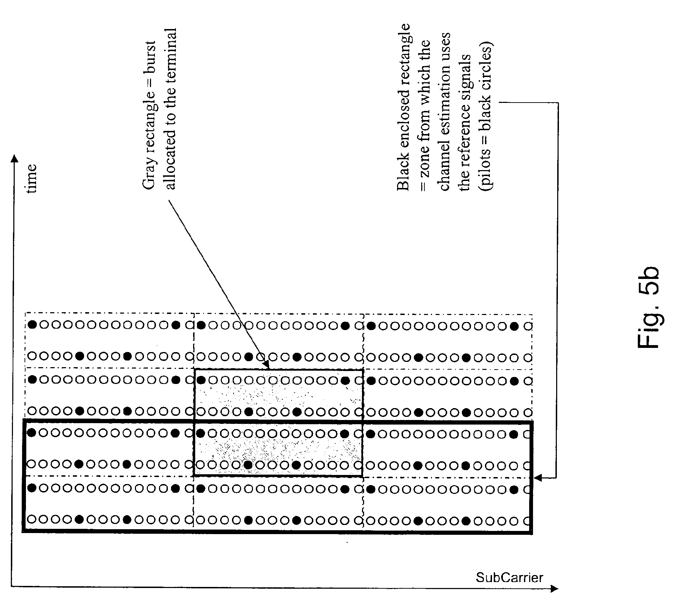

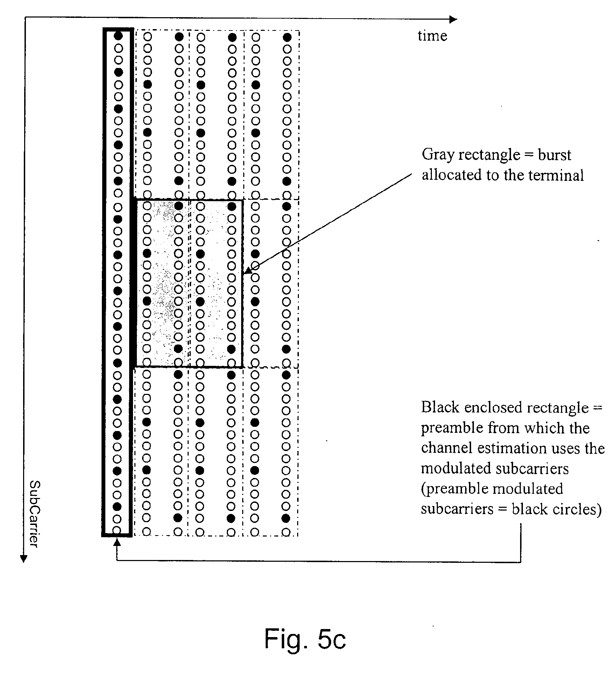

A typical architecture of the receiver according to the particular embodiment of the invention is shows in figures 4 and 5, and is detailed below.
The receiver may comprise:
- a decoding module 41 implementing the steps of performing decoding process, the decoding module comprising the plurality of function modules, as described above, each of which performing a part of the decoding process;
- a control plane decoder module 42 which is the same of the control plane decoder module 17 described above, and which implements at least the steps of extracting coding information;
- a quality measurement module 43 implementing the steps of determining the quality value; and
- a tuner module 44 implementing the steps of determining margin and control signal.

One objective of the control plane decoder module 42 is to decode control plane. As a result of the decoding of control plane, a number of information are made available to the receiver, as for example, according to standard WiMAX:
- Allocation information and position of data addressed to a given terminal in a given frame;
- Modulation and Coding scheme of data addressed to a given terminal in a given frame;
- MIMO (Multi Input Multi Output) coding scheme of data addressed to a terminal;
- Beamforming information of data addressed to a terminal; and
- Power boosting value of data addressed to a terminal;

An example of function that can be adjusted in order to be speed up is given below.
This function is for example the channel estimation. As the receiver is designed to provide the best performance, the channel estimation is one function that has a big impact on performance level, and is one of the functions that need to be optimized.
In typical implementation of channel estimation, this function uses reference signals in order to estimate the channel and derive coefficients to be applied on the data for the channel correction. In typical standards using OFDM, these reference signals are distributed on some subcarriers surrounding sub-carriers carrying data. These reference signals are called "Pilots" in WiMAX terminology. In order to have the best channel estimation, this function uses as much reference signals as possible, and generally reference signals on sub-carriers preceding and following, in time and frequency, the data sub-carriers, as illustrated in figure 5a. The channel estimation can be speed up by only using reference signal sub-carriers early in time compared to data subcarriers, as illustrated in figure 5b. Furthermore, the channel estimation may use the preamble instead of the reference pilots, as illustrated in figure 5c. In this case, some correction shall be taken into account, as power compensation, as in WiMAX the preamble is power boosted compared to data.

The term "terminal" used in this description shall not be understood as a restriction of the usage of the invention to terminals equipment, as this invention can be used for example as well in relay stations, base stations, access points, with some necessary adaptations necessary according to the context. In term of adaptations, the control plane decoding may be different. Indeed, in the base station, the control plane is normally generated locally and transmitted towards the network. Hence, the base station implementing the invention needs not to decode the control plane from the air interface but instead will read it internally from the function that has generated it.

This invention is not only applicable to wireless communication systems using WiMAX standards, but can be applied to communication systems using other standard such as for example 3GPP-LTE standard or 3GPP2-UMB standard.

## Claims

1. Method for adjusting the decoding speed of an incoming signal (Sin), the incoming signal comprising successive frames, each of which comprising at least a first data coded in accordance with a first type of modulation and coding scheme and a second data coded with a second type of modulation and coding scheme, the method comprising at least the steps of:
- receiving the incoming signal;
- Determining (23) a quality value representative of the quality of the incoming signal;
- performing a decoding process to decode the first data, said decoding process consisting in performing a plurality of functions, and generating a first decoded data; and
- extracting (24) from the first decoded data, at least a coding information giving the type of modulation and coding scheme used to code the second data;
**characterized in that** it further comprises the steps of:
- determining a margin between a reference value and the quality value, the reference value being correlated with the coding information; and
- determining and generating a control signal according to the margin, to adjust at least a parameter of at least one function, the parameter affecting the speed of the decoding process of the second data.

2. Method according to claim 1, wherein the information giving the type of modulation and coding scheme used to code the first data is stored in a table, and wherein the second data comprises a control plane.

3. Method according to claim 1, wherein the first data comprises the control plane and the second data comprises a data plane.

4. Method according to claim 1, wherein the first data comprises a first control plane and the second data comprises a second control plane.

5. Method according to any of claims 1 to 4, wherein the first control plane is a Frame Control Header (FCH), the second control plane is a Map Application Part Information Element (MAP-IE), and the data plane is a burst, according to a particular standard WiMAX (Wireless Interoperability for Microwave Access).

6. Method according to any of claims 1 to 5, wherein the step of determining the quality value is performed at least once per frame.

7. Method according to any of claims 1 to 6, wherein the step of determining the quality value comprises the step of performing one or a plurality of quality measurements of the incoming signal, and wherein the quality value is equal to the result of said quality measurement or the result of one quality measurement of said plurality of quality measurements.

8. Method according to claim 7, wherein the quality value is equal to the result of the last quality measurement of said plurality of quality measurements.

9. Method according to any of claims 1 to 6, wherein the step of determining the quality value comprises the steps of:
- performing a plurality of quality measurements of the incoming signal;
- storing the results of the quality measurements in a memory; and
- performing a statistical computation by using the results stored in the memory; and wherein the quality value is equal to the result of said statistical computation.

10. Method according to any of claims 7 to 9, wherein one quality measurement of the incoming signal is performed by using any of the control plane or the data plane.

11. Method according to any of claims 1 to 10, wherein the reference value is further correlated with an acceptable implementation loss.

12. Method according to any of claims 1 to 11, wherein it is performed at least once for each frame of the incoming signal.

13. Method according to any one of claims 1 to 12, wherein the quality value is a signal-to-noise-ratio.

14. Method according to any one of claims 1 to 12, wherein the quality value is a carrier-to-interference-plus-noise-ratio.

15. Method according to any one of claims 1 to 14, wherein the parameter is adjusted in order to increase the speed of the decoding process if the value of the margin is positive, the resulting implementation loss remaining lower or equal to the acceptable implementation loss.

16. Method according to any one of claims 1 to 15, wherein one function of the decoding process is channel estimation, and wherein the parameter consists in using particular reference data in the incoming signal in order to perform the channel estimation.

17. Receiver with adjustable decoding speed of an incoming signal (Sin) in a wireless communication system,
**characterized in that** it implements at least the method according to any of claims 1 to 15, and **in that** it comprises at least:
- a decoding module (41) implementing at least the steps of performing decoding process, the decoding module comprising a plurality of function modules, each of which performing a part of the decoding process;
- a control plane decoder module (42) implementing at least the steps of extracting coding information;
- a quality measurement module (43) implementing at least the steps of determining the quality value; and
- a tuner module (44) implementing at least the steps of determining margin and control signal.

18. Receiver according to claim 17, wherein the tuner module further comprises a list of reference values, each of which being correlated with a type of modulation and coding scheme.

19. Wireless communication system **characterized in that** it comprises at least a receiver according to any one of claims 17 to 18.
